# EUROPÄISCHE PATENTSCHRIFT

(11) **EP 3 403 805 B1**
(45) Veröffentlichungstag und Bekanntmachung des Hinweises auf die Patenterteilung: **01.07.2020**
(21) Anmeldenummer: 18000331.1
(22) Anmeldetag: 06.04.2018
(51) Int. Cl.: B29C 49/00, B29C 49/22, B65D 77/00, B67D 1/04, B65D 25/14, B65D 83/00, B29K 105/16, B29L 31/00, B29K 509/08, B29K 23/00, B29K 67/00, B29C 49/04, B29C 49/06, B29C 49/48, B29K 309/08, B67D 1/08, B29L 9/00

(54) **BEHÄLTER MIT INNENBEUTEL**
CONTAINER WITH AN INNER BAG
RÉSERVOIR À SAC INTÉRIEUR

(30) Priorität: 16.05.2017 DE 102017004657
(43) Veröffentlichungstag der Anmeldung: 21.11.2018
(73) Patentinhaber: Gaplast GmbH, 82442 Altenau (DE)
(72) Erfinder: Kneer, Roland, 82490 Farchant (DE); Kneer, Stephan, 82490 Farchant (DE)
(74) Vertreter: Flosdorff, Jürgen

(56) Entgegenhaltungen:
- EP-A1- 3 112 109
- WO-A1-01/39957
- WO-A2-2004/002835
- US-A- 5 454 896
- US-A1- 2012 207 413
- Anonymous: "Effect of substrate roughness on the apparent surface free energy of sputter deposited superhydrophobic polytetrafluoroethylene thin films: Applied Physics Letters: Vol 95, No 3", , 24. Juli 2009 (2009-07-24), XP055510364, Gefunden im Internet: URL:https://aip.scitation.org/doi/full/10. 1063/1.3186079?mimetype=application/pdf&cr awler=true& [gefunden am 2018-09-27]
- Anonymous: "SEM pictures of PTFE in PP/PTFE (95/5) blend after applied shear... | Download Scientific Diagram", , 31. Dezember 2007 (2007-12-31), XP055510369, Gefunden im Internet: URL:https://www.researchgate.net/figure/SE M-pictures-of-PTFE-in-PP-PTFE-95-5-blend-a fter-applied-shear-history-by-the_fig9_276 482247 [gefunden am 2018-09-27]
- Anonymous: "Was ist ein Ionomer / Surlyn ? - arm-alysis", , 21. Juli 2011 (2011-07-21), XP055510372, Gefunden im Internet: URL:https://www.arm-alysis.de/was-ist-ein- ionomer-surlyn/ [gefunden am 2018-09-27]

## Beschreibung

Die Erfindung betrifft einen Behälter, bestehend aus einem im wesentlichen steifen Außenbehälter und einem leicht verformbaren Innenbeutel, wobei der Außenbehälter und der Innenbeutel aus verschiedenartigen thermoplastischen Kunststoffen bestehen, derart, dass der Außenbehälter und der Innenbeutel keine Schweißverbindung miteinander eingehen. Der Behälter enthält eine Behälteröffnung, aus der Behälterinhalt abgegeben wird, und wenigstens eine Druckausgleichsöffnung in der Wand des Außenbehälters zum Druckausgleich im Zwischenraum zwischen dem Außenbehälter und dem Innenbeutel bei Kontraktion des Innenbeutels. Der Behälter kann im Coextrusionsverfahren herstellt sein, wobei durch Formen von Überschussmaterial am Boden der Blasform der Innenbeutel durch eine Bodenschweißnaht verschlossen ist, die in eine ebenfalls verschlossene Bodenschweißnaht des Außenbehälters eingeklemmt ist. Ein derartiger Behälter ist beispielsweise in dem europäischen Patent EP 0 912 420 offenbart, das außerdem beschreibt, wie Druckausgleichsöffnungen in der Wand des Außenbehälters ausgebildet werden können.

Der Behälter kann aber auch im Spritzgussverfahren hergestellt sein, indem das Material für den Innenbeutel in einer Spritzgussform in einen darin angeordneten Außenbehälter eingespritzt wird. Ein deartiger Behälter ist in der EP 2 801 465 offenbart.

Bei der Herstellung des Behälters im Coextrusionsverfahren wird ein aus wenigstens zwei Schläuchen bestehender Vorformling - einer für den Außenbehälter und einer für den Innenbeutel - coextrudiert und zwischen den geöffneten Hälften einer Blasform angeordnet, wobei die Blasform geschlossen wird, wenn der Vorformling die zur Herstellung des Behälters erforderliche Länge hat. Dabei wird - wie oben erwähnt - Überschussmaterial am Boden der Blasform so geformt und abgequetscht, dass die geschlossenen Bodenschweißnähte des Außenbehälters und des Innenbeutels ausgebildet werden.

Danach wird der Vorformling durch ein Druckmedium zur Anlage an die Wandung der Blasform aufgeblasen und aus der Blasform entnommen.

Die verschiedenartigen Kunststoffe des Außenbehälters und des Innenbeutels gehen zwar keine Schweißverbindung miteinander ein, sie haften aber aneinander mit beträchtlichen Adhäsionskräften. Bevor der Behälter mit Behälterinhalt gefüllt wird, der später mit einer Pumpe oder einer Dispensereinheit (Squeeze) durch Zusammendrücken des Behälters allmählich abgegeben wird, muss der Innenbeutel wenigstens weitgehend von der Wand des Außenbehälters abgelöst und dann wieder an diese angelegt werden. Hierzu wird durch die Behälteröffnung ein Unterdruck oder durch Druckausgleichsöffnungen ein Überdruck auf den Innenbeutel aufgebracht, der sich daraufhin zusammen zieht und sich bisher mehr oder weniger unkontrolliert von dem Außenbehälter ablöst, wobei es vorkommen kann, dass sich der Innenbeutel nur an einer Seite der Bodennaht ablöst. Anschließend wird durch die Behälteröffnung ein Druckmedium in den Innenbeutel eingeführt, um diesen wieder an den Außenbehälter anzulegen, damit der Innenbeutel das vorgesehene Füllvolumen erhält.

Wenn der Innenbeutel nicht weitgehend gleichmäßig von der Wand des Außenbehälters abgelöst wurde, kann trotz Druckausgleichsöffnungen in der Wand oder in dem Boden des Außenbehälters in dem Innenbeutel als Folge der Abgabe von Behälterinhalt ein verhältnismäßig großer Unterdruck auftreten. Je größer dieser Unterdruck ist, umso größer ist die Permeation durch die Wand des Innenbeutels und die Gefahr, dass dieser undicht wird. Wenn der Unterdruck in dem Innenbeutel zu groß wird, kann dies auch die Funktionsfähigkeit einer Pumpe oder Dispensereinheit beeinträchtigen, so dass nicht der gesamte Behälterinhalt abgegeben werden kann. Bei bestimmten Materialien für den Außenbehälter und den Innenbeutel sind die Adhäsionskräfte so groß, dass zum Ablösen des Innenbeutels ein großer Unterdruck erforderlich ist. Dennoch löst sich der Innenbeutel meist unterschiedlich an den beiden Seiten der Bodennaht von dem Außenbehälter und oft nur unvollständig, so dass es passieren kann, dass später nicht der gesamte Behälterinhalt abgegeben werden kann. Der große Unterdruck kann zudem eine bleibende Verformung des Innenbeutels zur Folge haben, so dass dieser nicht mehr glatt, im ungünstigen Fall unter Bildung von Falten an den Außenbehälter angelegt werden kann.

Die EP 3 112 109 A1 offenbart einen aus zwei Schichten bestehenden Behälter, die als Vorformlinge im Spritzgussverfahren hergestellt werden. Ein Freigabemittel kann entweder auf eine oder beide Flächen des inneren und des äußeren Vorformlings aufgetragen werden und bildet eine Zwischenschicht, wobei hierzu jedes am Markt verfügbare Freigabemittel verwendbar ist, das den Blastemperaturen stand hält. Dieses Freigabemittel kann nach dem Einspritzen des Kunststoffs zur Ausbildung der ersten Schicht oder vor dem Einspritzen des Kunststoffs zur Bildung der zweiten Schicht aufgebracht werden. Das Freigabemittel kann auch in den Kunststoff zur Bildung der Innenschicht, der Außenschicht oder einer Kombination davon integriert werden.

Die US 5,454,896 offenbart, dass durch die Behälteröffnung eines Außenbehälters ein Innenbeutel eingesetzt wird, der mit Klebestreifen versehen ist, mit denen der Innenbeutel beim Aufblasen an der Innenwand des Außenbehälters festgeklebt wird.

Die WO2004/002835 A2 befasst sich mit einer Verpackung, die beispielsweise für Cerealien vorgesehen ist und eine sogenannte Peel-Schicht hat, an der die Verpackung aufgerissen werden kann, ohne dass die übrigen Schichten der Verpackung verletzt werden. Diese Peel-Schicht enthält u.a. mineralische Füllstoffe und Gleitadditive, die mikroskopische Unregelmäßigkeiten in der Polymer-matrix hervorrufen, wodurch die Peel-Schicht geschwächt wird, so dass sie leicht aufgerissen werden kann.

Die US2012/207413 A1 offenbart einen Behälter bestehend aus einem im wesentlichen steifen Außenbehälter und einem leicht verformbaren Innenbeutel, die aus verschiedenartigen thermoplastischen Kunststoffen bestehen, mit einer Behälteröffnung und wenigstens einer Druckausgleichsöffnung, wobei die Schicht des Innenbeutels, die dem Außenbehälter zugewandt ist, mit pulverförmigen Partikeln sehr kleiner Abmessungen bestreut ist. Diese pulverförmigen Partikel können jede Pulverform, polygonale oder nicht-polygonale, zerteilte oder raue Form haben. Der Innenbeutel wird vor der Erwärmung in einen Behälter eingeführt, in dem sich die pulverförmigen Substanzen befinden, wodurch der Vorformling mit den Partikeln bestreut wird. Der Vorformling wird dann in den vorgefertigten Behälter eingesetzt und aufgeblasen.

Der vorliegenden Erfindung liegt die Aufgabe zugrunde, einen Behälter der betrachteten Art anzugeben, bei dem die weiter oben erwähnten Nachteile vermieden sind.

Diese Aufgabe wird erfindungsgemäß durch die Merkmale des Patentanspruchs 1 gelöst.

Vorteilhafte Ausgestaltungen der Erfindung sind in den Unteransprüchen gekennzeichnet.

Die Erfindung sieht vor, dass in der Schicht des Innenbeutels, die dem Außenbehälter zugewandt ist, und/oder in der Schicht des Außenbehälters, die dem Innenbeutel zugewandt ist, Mikrokörper aus einem bei der Herstellung des Behälters nicht schmelzenden Material enthalten sind, die Unebenheiten auf der Oberfläche der Schicht erzeugen. Hierdurch werden die Adhäsionskräfte zwischen dieser Schicht und der anliegenden Innenwand des Außenbehälters oder Außenwand des Innenbeutels erheblich reduziert, so dass zum Ablösen des Innenbeutels ein weit geringerer Unterdruck aufgebracht werden muss. Außerdem hat sich gezeigt, dass sich der Innenbeutel an beiden Seiten der Quetschnaht weitgehend gleichmäßig und vollständig von dem Außenbehälter ablöst und sich wieder glatt anlegen läßt, da wegen dem erheblich geringeren Unterdruck keine dauerhafte Verformung und Faltenbildung an dem Innenbeutel auftreten kann.

Dabei bedeutet "Mikrokörper", dass es sich um sehr kleine Körper handelt, die kleiner als die Dicke der zugehörigen Außenschicht des Innenbeutels oder Schicht bzw. Innenschicht des Außenbehälters sind. Die Größe der Mikrokörper liegt vorzugsweise im Mikro-Bereich, kann aber auch im Nano-Bereich liegen. Wichtig ist, dass sie Unebenheiten auf der Oberfläche der Schicht erzeugen.

Die Mikrokörper haben eine Kugelform mit glatten Oberflächen. Die gerundeten Oberflächen haben keine spitzen Ecken und scharfen Kanten.

Als Material für die Mikrokörper sind viele Stoffe geeignet, die bei der Herstellung des Behälters nicht schmelzen und ihre Form bewahren. Erfindungsgemäß werden Glaskugeln als Mikrokörper verwendet.

Je nach Behälterinhalt kann der Innenbeutel aus der einen, oben erwähnten Schicht mit den integrierten Mikrokörpern bestehen. Als Material für diese Schicht ist Surlyn oder PE bevorzugt.

Bei vielen Anwendungsfällen enthält der Innenbeutel wenigstens zwei weitere Schichten, die bevorzugt aus EVOH als Mittelschicht und einer Innenschicht aus Surlyn oder PE bestehen. Die Erfindung ist aber nicht auf einen solchen Schichtaufbau beschränkt.

Der Außenbehälter besteht bevorzugt aus einer Schicht aus PET oder PP. Der Außenbehälter kann aber auch aus zwei oder mehr Schichten bestehen.

Die Mikrokörper können bei dem Coextrusionsverfahren entweder dem zugehörigen Schichtmaterial in dem Extruder beigemischt werden, oder sie werden zuvor mit dem Material kompoundiert und gemeinsam mit diesem in den Extruder eingeführt.

Der Außenbehälter kann eine einzige Druckausgleichsöffnung haben, die in der Umfangswand oder in der Bodenwand ausgebildet ist. Es können aber auch zwei Druckausgleichsöffnungen ausgebildet sein, die sich beiderseits der Quetschnaht befinden. Auch eine größere Anzahl von Druckausgleichsöffnungen liegen im Rahmen der Erfindung.

## Patentansprüche

1. Behälter, bestehend aus einem im wesentlichen steifen Außenbehälter und einem leicht verformbaren Innenbeutel, wobei der Außenbehälter und der Innenbeutel aus verschiedenartigen thermoplastischen Kunststoffen bestehen und keine Schweißverbindung miteinander eingehen, mit einer Behälteröffnung und wenigstens einer Druckausgleichsöffnung in der Wand des Außenbehälters zum Druckausgleich im Zwischenraum zwischen dem Außenbehälter und dem Innenbeutel bei Kontraktion des Innenbeutels,
wobei in der Schicht des Innenbeutels, die dem Außenbehälter zugewandt ist, und/oder in der Schicht des Außenbehälters, die dem Innenbeutel zugewandt ist, ein die Adhäsion zwischen den Schichten reduzierendes Mittel integriert ist, das aus einem bei der Herstellung des Behälters nicht schmelzenden Material besteht,
wobei das die Adhäsion reduzierende Mittel Mikrokörper sind, die Unebenheiten auf der Oberfläche der Schicht erzeugen, **dadurch gekennzeichnet, dass** die Mikrokörper Glaskugeln sind.

2. Behälter nach Anspruch 1,
**dadurch gekennzeichnet,**
**dass** die Schicht aus Surlyn® oder PE besteht.

3. Behälter nach einem der Ansprüche 1 oder 2,
**dadurch gekennzeichnet,**
**dass** der Innenbeutel zwei weitere Schichten aufweist, die aus EVOH als Mittelschicht und Surlyn® oder PE bestehen.

4. Behälter nach einem der Ansprüche 1 bis 3,
**dadurch gekennzeichnet,**
**dass** der Außenbehälter aus PET oder PP besteht.

5. Behälter nach einem der Ansprüche 1 bis 4,
**dadurch gekennzeichnet,**
**dass** der Behälter im Coextrusionsverfahren hergestellt ist, wobei beim Abquetschen von Überschussmaterial am Boden der Blasform der Innenbeutel durch eine Bodenschweißnaht verschlossen und diese Bodenschweißnaht in eine ebenfalls verschlossene Bodenschweißnaht des Außenbehälters eingeklemmt ist.

6. Behälter nach einem der Ansprüche 1 bis 4,
**dadurch gekennzeichnet,**
**dass** der Behälter im Spritzgussverfahren hergestellt ist, indem das Material für den Innenbeutel in einer Spritzgussform in einen darin angeordneten Außenbehälter eingespritzt wird.

## Claims

1. A container consisting of a substantially stiff outer container and a readily deformable inner bag, wherein the outer container and the inner bag consist of different thermoplastic materials and have no weld connection with one another, with a container opening and at least one pressure equalisation opening in the wall of the outer container for equalising the pressure in the space between the outer container and the inner bag on contraction of the inner bag, wherein integrated into the layer of the inner bag, which is directed towards the outer container, and/or into the layer of the outer container, which is directed towards the inner bag, there is means which reduce the adhesion between the layers, which consists of a material which does not melt during the manufacture of the container, wherein the means reducing the adhesion are microparticles, which produce irregularities on the surface of the layer, **characterised in that** the microparticles are glass balls.

2. A container as claimed in Claim 1, **characterised in that** the layer consists of Surlyn® or PE.

3. A container as claimed in one of Claims 1 or 2, **characterised in that** the inner bag includes two further layers, which consist of EVOH as the middle layer and Surlyn® or PE.

4. A container as claimed in one of Claims 1 to 3, **characterised in that** the outer container consists of PET or PP.

5. A container as claimed in one of Claims 1 to 4, **characterised in that** the container is manufactured in a coextrusion process, wherein on squeezing out excess material on the base of the blow mould the inner bag is sealed by a base weld seam and this base weld seam is clamped in a base weld seam, which is also sealed, on the outer container.

6. A container as claimed in one of Claims 1 to 4, **characterised in that** the container is manufactured in an injection moulded process, in which the material for the inner bag is injected in an injection moulding into an outer container arranged therein.

## Revendications

1. Contenant constitué d'un contenant extérieur sensiblement rigide et d'une poche intérieure facilement déformable, dans lequel le contenant extérieur et la poche intérieure sont constitués de matières synthétiques thermoplastiques de types différents et ne subissent aucun assemblage par soudage les uns aux autres, avec une ouverture de contenant et au moins une ouverture de compensation de pression dans la paroi du contenant extérieur pour la compensation de pression dans l'espace intermédiaire entre le contenant extérieur et la poche intérieure lors de la contraction de la poche intérieure,
dans lequel est intégré dans la couche de la poche intérieure, qui est tournée vers le contenant extérieur, et/ou dans la couche du contenant extérieur, qui est tournée vers la poche intérieure, un moyen réduisant l'adhésion entre les couches, qui est constitué d'un matériau ne fondant pas lors de la fabrication du contenant,
dans lequel le moyen réduisant l'adhésion est des microcorps, qui génèrent des irrégularités sur la surface de la couche, **caractérisé en ce que** les microcorps sont des billes de verre.

2. Contenant selon la revendication 1,
**caractérisé en ce**
**que** la couche est constituée de Surlyn® ou de PE.

3. Contenant selon l'une quelconque des revendications 1 ou 2,
**caractérisé en ce**
**que** la poche intérieure présente deux autres couches, qui sont constituées de EVOH en tant que couche centrale et de Surlyn® ou de PE.

4. Contenant selon l'une quelconque des revendications 1 à 3,
**caractérisé en ce**
**que** le contenant extérieur est constitué de PET ou de PP.

5. Contenant selon l'une quelconque des revendications 1 à 4,
**caractérisé en ce**
**que** le contenant est fabriqué lors du procédé de coextrusion, dans lequel lorsqu'un excédent de matériau est écrasé au niveau du fond du moule de soufflage, la poche intérieure est fermée par un cordon de soudure de fond et ledit cordon de soudure de fond est coincé dans un cordon de soudure de fond également fermé du contenant extérieur.

6. Contenant selon l'une quelconque des revendications 1 à 4,
**caractérisé en ce**
**que** le contenant est fabriqué lors du procédé de moulage par injection **en ce que** le matériau pour la poche intérieure est injecté dans un moule de moulage par injection dans un contenant extérieur disposé dans celui-ci.
